# EUROPÄISCHE PATENTANMELDUNG

(11) **EP 2 746 734 A1**
(43) Veröffentlichungstag der Anmeldung: **25.06.2014**
(21) Anmeldenummer: 13198169.8
(22) Anmeldetag: 18.12.2013
(51) Int. Cl.: G01F 23/22, H01H 35/00, H01H 35/18

(54) **Schalter für einen Drehflügelmelder**

(30) Priorität: 18.12.2012 DE 102012112584
(71) Anmelder: UWT GmbH, 87488 Betzigau (DE)
(72) Erfinder: Wehrmeister, Gerhard, 80437 Kempten (DE); Anders, Andreas, 87740 Buxheim (DE)
(74) Vertreter: vP-IP von Puttkamer Berngruber Loth Spuhler

(57) **Zusammenfassung**

Schalter zur Veränderung des Schaltzustands wenigstens eines auf einen elektrischen Stromkreis wirkenden Kontakts (1) mit einem den Schalter (2) betätigenden Schaltgeber (3). Dem Schaltgeber (3) ist ein die Betätigung des Schalters (2) zeitlich verzögernder Puffer (4) vorgeschaltet.

## Beschreibung

Die Erfindung betrifft einen Schalter für einen Drehflügelmelder zur Veränderung des Schaltzustands wenigstens eines auf einen elektrischen Stromkreis wirkenden, insbesondere unterbrechenden oder schließenden Kontakts mit einem den Schalter betätigenden Schaltgeber.

Ein Drehflügelmelder (auch Drehflügelschalter) ist ein Füllstandmessgerät zur Grenzstanderfassung in Silos und Behältern für Schüttgut. Der Drehflügelmelder besteht aus einem Gehäuse, das einen Motor und die Elektronik enthält. Dieser Motor treibt eine Welle an, an der ein Messflügel befestigt ist. Nach dem Geräteeinbau am Silo befindet sich das Gehäuse außerhalb der Behälterwand und der Drehflügel, auch Messflügel genannt, samt Welle im Innenraum des Silos. Der Messflügel dreht sich langsam an der Welle im Innenraum des Silos. Sobald der Pegel des Schüttgutes den Messflügel bedeckt, stoppt dessen Rotation. Der Motor läuft nicht mehr und der Stopp verursacht ein Ausgangssignal, z.B. in Form einer leuchtenden Lampe. Umgekehrt startet der Motor wieder, sobald das Schüttgut den Drehflügel nicht mehr bedeckt. Erneut verursacht der veränderte Pegel ein Ausgangssignal.

Aus der DE 28 18 968 ist ein Füllstandsanzeiger für Silos und dergleichen bekannt, der einen über eine Drehwelle von einem Motor aus antreibbaren Drehflügel aufweist. Der Drehflügel ragt in das Innere des Silos hinein und ist in seiner durch den Motor bewirkten Drehbewegung durch das Schüttgut des Silos hemmbar. Ist der Drehflügel in seiner Drehbewegung eingeschränkt, löst der Motor eine Drehbewegung aus, die seinem Drehmoment entgegen gerichtet ist. Durch die Verstellung seiner Anstellung verstellt der Motor einen Microschalter für Signal- und/oder Steuermittel. Der Motor ist dazu einseitig fliegend gelagert. Am Stator des Motors ist eine Nockenscheibe angebracht, die den Microschalter für die Signal- und/oder Steuermittel betätigt. Das Gehäuse des Motors ist in der Drehrichtung seines Rotors durch eine Zugfeder am Gehäuse festgehalten. Der Signal- und/oder steuermittelbetätigende Microschalter ist schaltverzögert ausgebildet.

Aus der US 4,695,685 ist ein Drehflügelmelder bekannt, mit dem der Füllstand eines mit Schüttgut befüllbaren Silos anzeigbar ist. Der Drehflügelmelder umfasst dabei einen Motor, der innerhalb eines Schutzgehäuses angeordnet ist. Der Motor ist über eine Welle mit dem Drehflügel verbunden, wobei der Drehflügel in das Innere des Silos hineinragt. Wenn das Schüttgut im Inneren des Silos den Drehflügel erreicht, verschwenkt der Motor innerhalb des Gehäuses um eine Achse. Durch die Schwenkbewegung des Motors werden Schalter aktiviert, die innerhalb des Gehäuses angeordnet sind. Eine Feder verbindet den Motor mit dem Gehäuse und gewährleistet eine Schwenkbewegung des Motors zwischen einer Stellung, in der der Schalter aktivierbar ist und einer weiteren Stellung, in der der Schalter deaktiviert ist.

Es ist ferner als Stand der Technik die GB 2 430 491 A bekannt. Das Dokument offenbart einen Sensor zur Ermittlung des Füllstands eines Silos. Der Sensor umfasst dabei einen Drehflügel, der von einem Elektromotor angetrieben wird. Der Sensor erfasst mit Hilfe eines magnetischen Encoders, dass die Antriebswelle in ihrer Drehung beeinträchtigt ist, wenn sich der Drehflügel auf Grund es im Silo anwachsenden Schüttguts nicht mehr frei drehen lässt.

Aus der US 2,116,075 ist ein elektrischer Schalter bekannt, der in Zusammenhang mit befüllbaren Silos und insbesondere mit Drehflügelmeldern verwendbar ist. Der Schalter unterbricht oder schließt einen Stromkreislauf.

Die im Stand der Technik, in Drehflügelmeldern verwendeten Schaltvorrichtungen erweisen sich vielfach als nachteilig, da die Antriebsmotoren in Anwendungen sehr oft ein- und wieder ausgeschaltet werden mit permanent bewegtem Schüttgut bzw. Füllgut und dadurch erhöhtem Verschleiß ausgesetzt sind. Drehflügelmelder weisen einen Drehflügel, an einer von einem Elektromotor angetriebenen Welle auf. Die Welle ragt mit dem Drehflügel in einen Behälter hinein, der permanent bewegtes Material umfasst. Das Material, insbesondere Schüttgut wird am Boden des Behälters entnommen und von oben nachgefüllt. Der sich drehende Flügel des Drehflügelmelders ist damit einem konstanten Eintrag und Austrag von schüttbarem Material ausgesetzt. Der Messflügel wird dabei in seiner Drehbewegung kontinuierlich von nachfließendem Material gehemmt und der Motor wird entgegen der Federkraft aus einer Ausgangsposition in eine Schaltposition verschwenkt.

Auf Grund einer permanenten Bewegung des Materials wird der Messflügel langsam gegen die Federkraft in die Schaltposition zurückbewegt. Der Elektromotor schwenkt langsam aus der Schaltposition zurück in die Ausgangsposition, wodurch der entlastete Motorschalter den Motor wieder in Gang setzt.

Aufgrund der durch das Schüttgut gehemmten Drehbewegung des Drehflügels wird der eingeschaltete Motor jedoch umgehend wieder in die Schaltposition zurück verschwenkt und der Motorlauf durch die erneute Schalterbetätigung gestoppt. Die Schwenkbewegung des Motors in die Schaltposition wird dadurch bewerkstelligt, dass die Rotationsgeschwindigkeit des Drehflügels bei laufendem Motor höher ist, als die Geschwindigkeit, mit der der ausgeschaltete Motor bei konstanter Materialbewegung aufgrund der Federkraft in die Ausgangsposition zurück verschwenkt wird. Auf diese Weise wird einem kontinuierlichen Hin- und Herschwenken des Motors zwischen der Ausgangsstellung und der Schaltstellung Vorschub geleistet. Ein kontinuierliches Ein- und Ausschalten des Motors führt zu deutlich erhöhtem Motorverschleiß. Zusätzlich wird der den Motor schaltende mechanische Schaltkontakt erhöhter Abnutzung ausgesetzt.

Aus dem Stand der Technik bekannte und mit Drehflügelmeldern ausgestattete Behälter erweisen sich als nachteilig, da der Grenzstand des Schüttguts in den genannten Behältern kontinuierlich entweder über- oder unterschritten wird. Daraus ergibt sich eine hohe Anzahl von Schaltzyklen. Das zu messende Schüttgut wird innerhalb des Silos beim Freiwerden des Messflügels teilweise bewegt. Bis zum Erreichen der Meldung "Silo ist leer" kann es beim Ablauf des Schüttguts aus dem Behälter zu einer erhöhten Anzahl von Schaltzyklen des Elektromotors kommen. Konstruktiv schwache Bauteile, wie z. B. der Microschalter, können durch die erhöhte Anzahl von Schaltzyklen mechanisch überbeansprucht werden. Zusätzlich ist der Schalter, insbesondere der Microschalter der Gefahr ausgesetzt, dass die Kontaktflächen durch Kontaktabbrand zerstört werden, wodurch die mechanisch bewegten Teile des Schalters erhöhtem Verschleiß ausgesetzt sind oder gänzlich beschädigt werden.

Viele aus dem Stand der Technik bekannte Elektromotoren weisen zur Definition der Drehrichtung mechanische Rücklaufsperren auf. Es ist aber zu beobachten, dass mit Rücklaufsperren ausgestattete Elektromotoren beim Einschalten einer Wechselspannung mittels eines Microschalters in bis zu 50 % der Fälle nicht in die gewünschte Drehrichtung anlaufen. Die vorgesehene mechanische Rücklaufsperre bewirkt dann eine Blockierung der Drehrichtung. Zusätzlich springt der Motor in die gewünschte Drehrichtung um.

Der Erfindung liegt daher die Aufgabe zugrunde, einen elektrischen Schalter mit erhöhter Lebensdauer und geringerem Verschleiß bereitzustellen. Der Einsatz des erfindungsgemäßen Schalters soll zusätzlich zu einer Erhöhung der Lebensdauer und einer Verringerung des Verschleißes des durch ihn geschalteten Elektromotors sowie der Bauteile des Elektromotors führen. Aufgabe der Erfindung ist es weiterhin, einen Drehflügelmelder mit preisgünstigen Standardteilen, z. B. Synchronmotor mit mechanischer Rücklaufsperre und/oder Motor-Mikroschalter, aufzubauen, der aufgrund einer erhöhten Schalthysterese (Weg am Motorschalter zwischen den Stellungen "Motor ein" und "Motor aus") eine deutliche Reduzierung der Schaltzyklen und somit Verschleißreduzierung erfährt.

Die Aufgabe wird gelöst durch die Merkmale des Patentanspruchs 1.

Der Schaltweg infolge der Schwenkung des Motors wird zwischen den Zuständen "Motor ein" und "Motor aus" vergrößert. Dadurch ergibt sich in kritischen Anwendungen eine verminderte Anzahl an Schaltzyklen, was zu einer längeren Lebensdauer des Motors mit mechanischer Rücklaufsperre und des Motorschalters führt.

Die Erfindung sieht deshalb einen Schalter zur Veränderung des Schaltzustands wenigstens eines auf einen elektrischen Stromkreis wirkenden, insbesondere unterbrechenden oder schließenden Kontakts vor, der einen den Schalter betätigenden Schaltgeber umfasst. Dem Schaltgeber ist ein die Betätigung des Schalters zeitlich verzögernder Puffer vorgeschaltet. Der Puffer bewirkt einen längeren Schaltweg zwischen ausgeschaltetem Motor und Einschalten des Motors. Somit wird die dem Schalter beinhaltete kleine Hysterese deutlich vergrößert. Durch die Verwendung eines zusätzlichen Puffers, welcher den Motorschalter in der Stellung "Motor aus" fixiert und diesen erst nach einem Schwenkweg aus der Position 2 in Richtung Position 1, wobei der Schwenkweg deutlich größer ist als die Hysterese des Mikroschalters, wieder freigibt und somit den Motor einschaltet, wird die gegenüber dem Stand der Technik angestrebte verminderte Anzahl an Schaltzyklen erreicht..

Die gewünschte zeitliche Verzögerung ergibt sich aus einer Wegerhöhung durch den Puffer im Zusammenspiel mit der Funktionsweise des Drehflügelmelders. Im Zusammenspiel mit der sich langsam zurückschwenkenden Motoreinheit in der Anwendung eines Drehflügelmelders in permanent bewegtem Schüttgut werden dadurch die reduzierten Motorschaltzyklen bewirkt.

Erfindungsgemäß ist eine Motoreinheit in einem elektrischen Stromkreis angeordnet. Die Motoreinheit umfasst insbesondere einen elektrisch angetriebenen Motor sowie eine Getriebeuntersetzung. Der Motor treibt eine Antriebsachse des Drehflügelmelders an, an dessen vom Motor abgewandten Ende ein Drehflügel angeordnet ist.

Der Motor ist vorzugsweise ein Elektromotor. Neben einem Analogmotor kann auch ein Digitalmotor eingesetzt werden. Der erfindungsgemäße Schalter kann im Zusammenhang mit Synchronmotoren eingesetzt werden, bei denen ein konstant magnetisierter Läufer synchron von einem bewegten magnetischen Drehfeld im umgebenden Stator mitgenommen wird. Desgleichen können Drehstrom- oder Asynchronmotoren eingesetzt werden.

Die Motoreinheit ist an einen Stromkreis angeschlossen, der wenigstens einen Kontakt aufweist, der geöffnet und geschlossen werden kann. Die Motoreinheit ist um eine Hochachse zwischen einer Ausgangsstellung und einer Schaltstellung hin und her schwenkbar. In der Schaltstellung können die Kontakte des Schalters z.B. mechanisch auf Grund der Schwenkbewegung der Motoreinheit betätigt werden.

Ein Gehäuse nimmt die Motoreinheit auf und schützt sie vor Verschmutzung und vor Beschädigung. Mit Hilfe des Gehäuses kann die Motoreinheit an einem Behälter, insbesondere an einem Silo befestigt werden, der zur Zuführung und zur Entnahme insbesondere von Schüttgut vorgesehen ist.

Die innerhalb des Gehäuses und gegenüber dem Gehäuse um eine Hochachse verschwenkbare Motoreinheit ist über ein Federelement mit dem Gehäuse verbunden. Das Federelement kann unterschiedliche Bauformen annehmen und zum Beispiel einen Drahtkörper umfassen oder schrauben- oder spiralförmig gewickelt sein. Das Federelement kann darüber hinaus stabförmig gestreckt oder ein abgeknicktes Bauteil sein. Im Weiteren wird zur Vereinfachung von einer spiralförmigen Feder ausgegangen.

Die Feder greift an ihrem einen Ende an der Motoreinheit und an ihrem anderen Ende an dem Gehäuse an. Ist der von der Motoreinheit angetriebene Drehflügelmelder nicht in seiner Bewegung beeinträchtigt, so zieht die Feder die Motoreinheit in eine Stellung, die entweder die Ausgangsstellung oder die Schaltstellung der Motoreinheit sein kann.

Im Folgenden wird beispielhaft und in keiner Weise ausschließlich davon ausgegangen, dass die Feder die Motoreinheit des Drehflügelmelders bei unbelastetem Drehflügel in die Ausgangsstellung verschwenkt.

Gegenüber der Ausgangstellung umfasst die Schaltstellung einen Schalter, mit dem der Motor der Motoreinheit ausgeschaltet oder angeschaltet werden kann. Es ist weiter möglich, dass in der Ausgangsstellung ein weiterer Schalter angeordnet ist, der z. B. ein visuelles, akustisches oder optisches Signal auslöst und somit den Füllstand signalisiert.

Bei Belastung des Drehflügels des Drehflügelmelders, wird dieser mit der Antriebswelle in seiner Drehbewegung gehemmt. Die um ihre Hochachse im Gehäuse schwenkbar angeordnete, insbesondere angelenkte, Motoreinheit wird aufgrund des Motordrehmoments entgegen der Wirkung der Feder um die Hochachse verschwenkt. Die Schwenkbewegung kann dabei im oder entgegen dem Uhrzeigersinn erfolgen.

Aus Vereinfachungsgründen wird im Folgenden davon ausgegangen, dass lediglich ein Schalter vorgesehen ist, der in der Schaltstellung der Motoreinheit durch die Motoreinheit betätigbar ist.

Durch Verschwenkung der Motoreinheit wird der Schalter, insbesondere ein Microschalter, mechanisch betätigt, wodurch eine Änderung des Schaltzustands des Kontaktes innerhalb des Schalters ausgelöst wird. Bei der Änderung des Schaltzustands des Kontakts wird die Öffnung oder das Schließen des Kontakts bewirkt. Die Öffnung des Kontakts unterbricht den elektrischen Stromkreis, wogegen der Stromkreis durch Schließen des Kontakts geschlossen wird.

Es ist wenigstens ein Schalter vorgesehen, bei dem die Änderung des Schaltzustands des Kontakts innerhalb des Stromkreises den Lauf des Elektromotors der Motoreinheit entweder unterbricht oder ihn in Gang setzt. Der Schalter wird dabei mechanisch ausgelöst.

Erfindungsgemäß können unterschiedliche Schalterarten wie z. B. Kippschalter, Einwegschalter, Mehrwegschalter Verwendung finden. Bei Bedarf kann zur Änderung des Schaltzustands des Kontakts dem Kontakt wenigstens ein Schalthebel vorgeschaltet sein.

Zur Betätigung des Schalters ist erfindungsgemäß ein Schaltgeber vorgesehen, dem ein Puffer vorgeschaltet ist.

Der Schaltgeber ist an der Motoreinheit befestigt und mit dieser verschwenkbar. Der Schwenkweg der Motoreinheit wird durch einen mechanischen Anschlag, z.B. durch einen Schaltgeber an der Leiterplatte, begrenzt. Der Schaltgeber kann dann weiter bis zum mechanischen Anschlag an der Leiterplatte schwenken.

Der Puffer bewirkt die zeitliche Verzögerung der Betätigung des Schalters durch den Schaltgeber. Die Auslösung des Schalters durch den Schaltgeber erfolgt zeitverzögert nach Durchlauf des Schaltgebers durch den Puffer; d.h. nach Durchlaufen des Puffers wird der Motor eingeschalten. Der Puffer selbst begrenzt nicht den Schwenkweg des Schaltgebers.

Der Puffer kann eine Kulisse oder eine Führung sein. Weiter ist denkbar, dass der Puffer ein Schlitz oder ein Steg oder eine Nut ist, in der der Schaltgeber geführt ist. Im Puffer können oder mechanische Auslöser vorgesehen sein, die eine Auslösung des Schalters durch den Schaltgeber bewirken.

Der Puffer kann ein Halteteil sein, das wenigstens zwei Nasen aufweist, zwischen denen der Schaltgeber bewegbar ist. Das Halteteil ist um eine Hochachse schwenkbar am Gehäuse gelagert.

Am Halteteil können Einrichtungen zur Änderung des Schaltzustands des Kontakts angebracht sein. Das Halteteil weist dazu einen Stützzylinder auf, an dessen oberem Ende die wenigstens zwei Nasen in einem Winkel vom Stützzylinder abragen. Unterhalb der Nasen weist der Stützzylinder zur bereichsweisen Vergrößerung und Verringerung seines Querschnitts Rundungen und/oder Nocken und/oder Ausnehmungen auf. Der Stützzylinder kann im Querschnitt zumindest bereichsweise elliptisch und/oder kreisförmig ausgebildet sein.

Das Halteteil ist mit seinen Nasen um die Längsachse des Stützzylinders drehbar angeordnet. Wird das Halteteil z. B. so gegenüber den Kontakten ausgerichtet, dass die Kontakte an einer Abflachung des Stützzylinders anliegen, so können die Kontakte geöffnet sein, was eine Unterbrechung des Stromkreises und somit eine Unterbrechung des Motorlaufs zur Folge hat. Wird das Halteteil hingegen derart um die Drehachse verdreht, dass der Stützzylinder mit einer Rundung an den Kontakten anliegt, so werden die Kontakte geschlossen, was ein Schließen des elektrischen Kreislaufes zur Folge hat, wodurch der Motorlauf gestartet wird.

Die Erfindung erweist sich als vorteilhaft, da dem Schaltgeber ein Puffer vorgeschaltet ist, wodurch ein zu häufiges kontinuierliches Ein- und Ausschalten des Motors vermieden wird. Eine daraus resultierende Verringerung der Schaltzyklen führt zu einer deutlichen Verringerung der Belastung des Schalters.

Gleichzeitig kann auf diese Weise die Lebensdauer des Elektromotors und sämtlicher durch den Elektromotor angetriebenen Bauteile des Drehflügelmelders erhöht werden. Die Erfindung trägt weiter zu einem geringerem Verschleiß an allen bewegten Teilen innerhalb des wenigstens einen Drehflügelmelders bei.

Verschleißzustände, wie z. B. Kontaktabbrand an den Kontaktflächen und ein Ausleiern mechanisch bewegter Teile der Motoreinheit können wirksam vermieden werden.

Die Lebensdauer des Drehflügelmelders kann deutlich verlängert werden, wodurch Herstellungskosten, Anschaffungskosten und Reparaturaufwand reduziert werden können.

Die Erfindung wird nachfolgend anhand eines in der Zeichnung wiedergegebenen Ausführungsbeispiels weiter erläutert. In der Zeichnung zeigen:
- Figur 1: eine im Stand der Technik verwendete schwenkbare Motoreinheit mit einem Mikroschalter im Zusammenwirken mit einem Drehflügel,
- Figur 2: in perspektivischer Darstellung eine Motoreinheit mit Leiterplatte, Schaltern und Schaltgeber,
- Figur 3: eine Motoreinheit mit Leiterplatte, Schaltern, Schaltgeber 3 und einem Halteteil 13, bei der der Schalter 2; 8 in Schaltstellung aktiviert ist (Motor ausgeschalten),
- Figur 4: ein Gehäuse nach Fig. 1, bei dem der Schalter 2; 8 geschaltet bleibt (Motor ausgeschalten) und der Schaltgeber 3 sich innerhalb des Puffers 4 befindet,
- Figur 5: ein Gehäuse nach Fig. 1, bei dem der Schalter 2; 8 durch die Wirkung des Halteteils 13 geschaltet bleibt und der Schaltgeber 3 sich am vom Schalter 2; 8 abgewandten Ende des Puffers 4 befindet und somit kurz vor dem Wiedereinschalten des Motors,
- Figur 6: ein Gehäuse nach Fig. 1 mit einem Schaltgeber 3, der durch Verdrehen des Halteteils 13 den Schalter 2; 8 in Ausgangsstellung geschaltet hat sowie den Signalschalter 2; 7 betätigt hat,
- Figur 7: ein Halteteil 13 in perspektivischer Darstellung von schräg unten gesehen,
- Figur 8: ein Halteteil 13 in perspektivischer Darstellung von schräg hinten gesehen,
- Figur 9: ein Halteteil 13 von unten gesehen,
- Figur 10: eine alternative Ausführungsform der erfindungsgemäßen Ausgestaltung in Seitenansicht,
- Figur 11: die alternative Ausführungsform der erfindungsgemäßen Ausgestaltung nach Fig. 10 in Draufsicht.

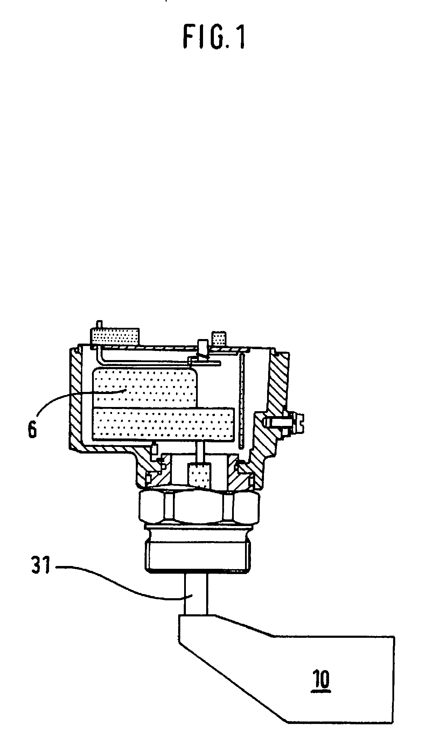

Figur 1 zeigt einen Drehflügelmelder aus dem Stand der Technik mit einer Motoreinheit 6, die über eine Antriebswelle 31 mit einem Drehflügel 10 verbunden ist.

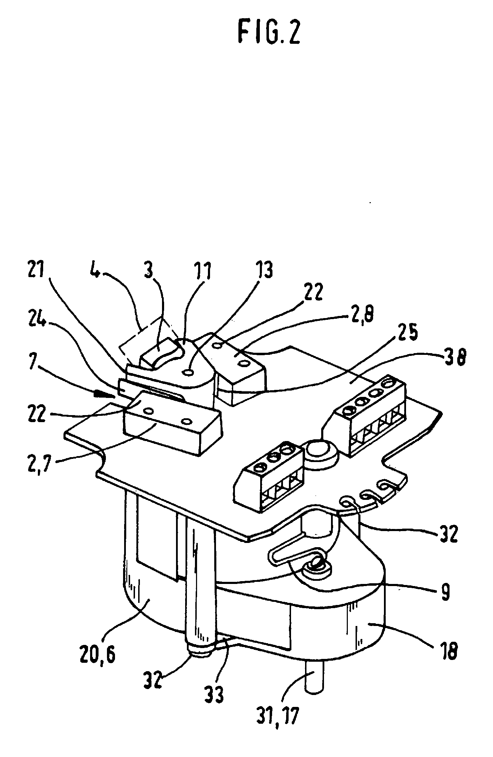

Figur 2 zeigt in perspektivischer Darstellung die erfindungsgemäße Motoreinheit mit Leiterplatte und Halteteil.

Die Motoreinheit 6 umfasst den Motor 20 und das Getriebe 18. Mit Bezugsziffer 31 ist die Antriebswelle bezeichnet, in deren Längsachse die Drehachse 17 verläuft, um die die Motoreinheit 6 verschwenkbar ist. Seitlich der Motoreinheit 6 sind die Dome 32 dargestellt, die die Trägerplatte 33 mit einer Tragestruktur verbinden, die sich unterhalb der Platine 38 erstreckt und den Schaltgeber 3 trägt. Die Motoreinheit 6 wird auf ihrer Unterseite von der Trägerplatte 33 und auf ihrer Oberseite von der nicht dargestellten Tragestruktur eingefasst. Zwischen dem Getriebe 18 und der Platine 38 ist die Feder 9 dargestellt, die die Motoreinheit 6 in Richtung der Ausgangsstellung 7 zieht. Auf der Oberseite der Platine 38 sind die beiden Schalter 2; 7 und 2; 8 dargestellt, die jeweils Kontakte 1; 22 umfassen, die jeweils einen nicht dargestellten Stromkreis unterbrechen oder schließen.

Zwischen den Schaltern 2; 7 und 2; 8 ist die Halteeinheit 13 dargestellt. Die Halteeinheit 13 weist je eine Nase 11 und eine Nase 21 auf, zwischen denen sich der Puffer 4 erstreckt. Zwischen den Nasen 11; 21 ist der mit der Motoreinheit 6 verbundene Schaltgeber 3 bewegbar. An ihren, dem Halteteil 13 zugewandten Innenseiten, weisen die Schalter 2; 7 und 2; 8 Schalthebel 24 bzw. Schalthebel 25 auf.

Der Stützzylinder 19 des Halteteils 13 weist Einrichtungen 14 auf, die in Form von Rundungen 23; 27 und/oder Abflachungen 26 ausgebildet sind und mit den Kontakten 1; 22 der Schalter 2; 7 und 2; 8 in Berührung gebracht werden können.

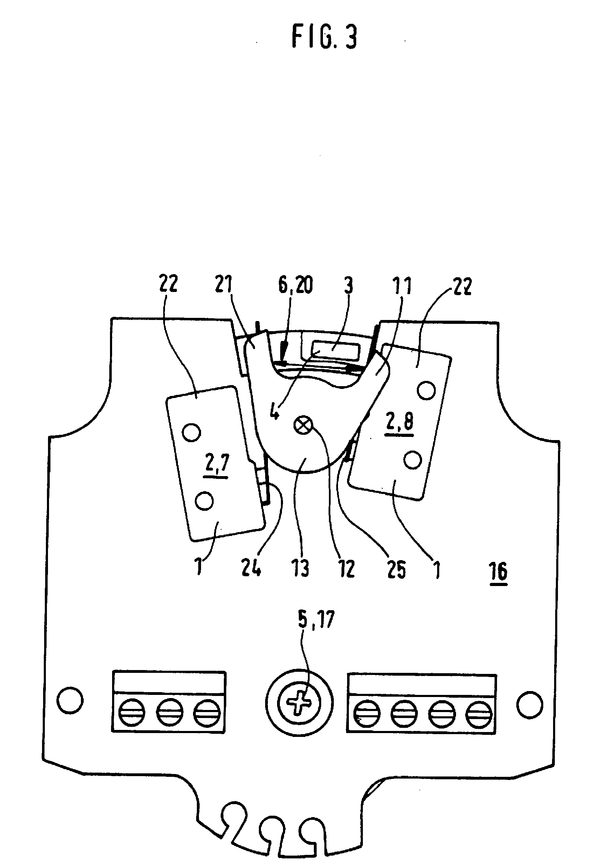

Fig. 3 zeigt die Situation, in der der freie Lauf des Drehflügels um die Drehachse 17 durch das im Silo befindliche Schüttgut beeinträchtigt wird.

Da der Motor das Drehmoment der Drehachse 17 nicht mehr auf den Drehflügel übertragen kann, wird die Motoreinheit 6 entgegen der Zugkraft einer Feder 9 aus einer Ausgangsstellung 7 in eine Schaltstellung 8 verschwenkt. Die Motoreinheit 6 ist innerhalb der Leiterplatte 16 um eine Hochachse 5 schwenkbar angelenkt. Die Hochachse 5 entspricht dabei der Drehachse 17 der Motoreinheit 6 innerhalb der Leiterplatte 16.

Die Leiterplatte 16, die eine Motoreinheit 6 und ein Getriebe 18 (beides nicht gezeigt) umfasst, ist in Fig. 3 in Draufsicht ein gezeigt. An der Oberseite der Leiterplatte 16 sind zwei Schalter (Motorschalter 2; 8 und Signalschalter 2; 7) dargestellt, von denen der Signalschalter 2; 7 in Ausgangstellung und der Motorschalter 2; 8 in Schaltstellung der Motoreinheit 6 angeordnet ist. Zwischen den Schaltern 2; 7 und 2; 8 ist ein Halteteil 13 dargestellt, das um eine Achse 12 schwenkbar an der Leiterplatte 16 angelenkt ist.

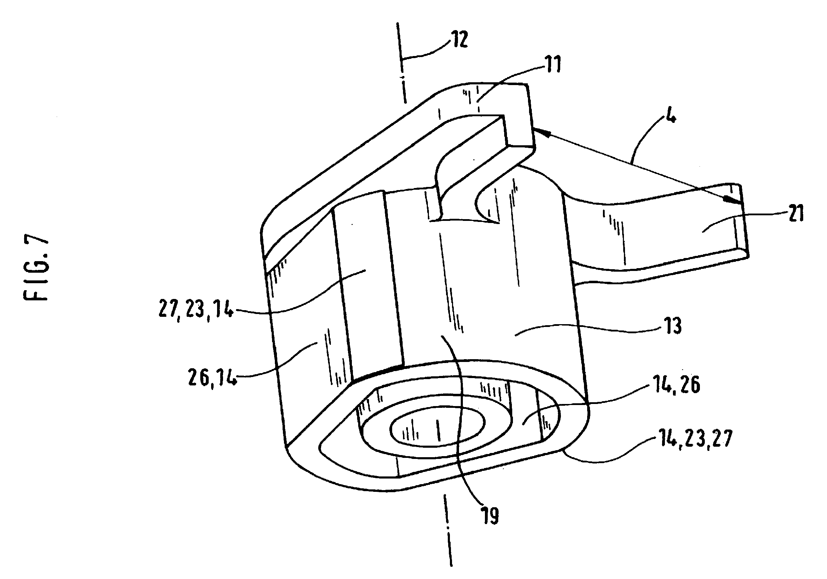

Das Halteteil 13 (siehe Fig. 7-9) weist einen Stützzylinder 19 auf, auf dessen von der Leiterplatte 16 abgewandten Ende zwei Nasen 11 und 21 angeordnet sind. Mit Verdrehung des Halteteils 13 wird im Bereich des Stützzylinders 19 die Rundung 23 mit dem Kontakt 1; 22 in Berührung gebracht, wodurch der Stromkreis unterbrochen wird und der Motorlauf des Motors 20 stoppt.

Zwischen den Nasen des Halteteils 13 erstreckt sich ein Puffer 4. Der Puffer 4 definiert den Weg, den ein Schaltgeber 3 zum Wiedereinschalten des Motorschalters 2; 8 zurücklegt.

Der Schaltgeber 3 ist dabei fest mit dem Motor 20 einer Motoreinheit 6 verbunden. Der Schaltgeber 3, der die Schwenkbewegung der Motoreinheit 6 mitmacht, bewegt sich im Puffer 4 von einer Nase 21 im Bereich der Ausgangsstellung 7 zu einer Nase 11 im Bereich der Schaltstellung 8. In Fig. 3 verschiebt der Schaltgeber 3 die Nase 11 also zu dem Schalter 2; 8 hin. Der Schalter 8 weist Kontakte 1; 22 auf. Erreicht der Schaltgeber 3 im Puffer die Nase 11 des Halteteils 13, so wird das Halteteil 13 um die Achse 12 verdreht.

Am Stützzylinder 19 des Halteteils 13 sind, durch die Nasen 11; 21 verdeckt, Einrichtungen 14 angeordnet. Die Einrichtungen können z. B. Abflachungen oder Rundungen oder Vergrößerungen oder Verkleinerungen des Querschnitts des Stützzylinders sein. Der Stützzylinder 19 des Halteteils 13 ist in diesem Ausführungsbeispiel durch den Schaltgeber 3 so um die Achse 12 gedreht, dass die Einrichtung 14 des Stützzylinders 19 in Form einer Rundung 23 am Kontakt 1 anliegt.

An den Schaltern 2; 7 und 2; 8 sind Schalthebel 24 bzw. 25 angeordnet. Der Schalthebel 25 wird zum Öffnen der Kontakte 1 und 22 durch die Rundung 23 an den Kontakt 1 des Schalters 2; 8 angedrückt. Die Rundung 23 oder auch die Abflachung 26 liegt zuerst an dem Schalthebel 25 an. Der Schalthebel 25 betätigt dann über einen weiteren im Mikroschalter befindlichen Stößel den Kontakt. Die Kontakte 1 und 22 stehen nicht mit einander in Berührung, sodass der Stromkreis unterbrochen ist.

Auf der gegenüberliegenden Seite liegt der Schalthebel 24 mit seinem freien Ende an der Einrichtung 14 in Form einer Abflachung 26 des Stützzylinders 19 des Halteteils 13 an. In Fig. 3 liegt die Rundung 23 des Stützzylinders 19 am Schalter 2; 8 an. Hierdurch wird der Kontakt 1 innerhalb des Schalters 2; 8 vom Kontakt 22 gelöst, wodurch der Motorlauf der Motoreinheit 6 unterbrochen wird.

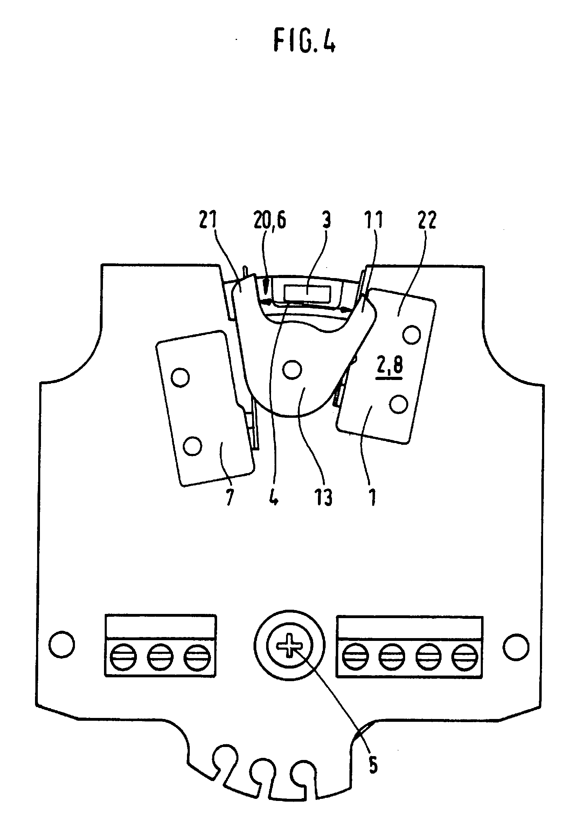

Fig. 4 zeigt die Situation, in der das Schüttgut im Behälter den Drehflügel wieder freigibt, so dass die Motoreinheit durch die Feder 9 aus der Schaltstellung 8 in die Ausgangsstellung 7 verschwenkt wird. Fig. 4 zeigt dabei im Wesentlichen die Situation der Fig. 3, mit dem Unterschied, dass durch Unterbrechung der Kontakte 1; 22 durch die Einrichtung 14 des Stützzylinders 15 der Motorlauf des Motors 20 weiterhin unterbrochen ist.

Da sich der Schaltgeber 3, der mit der Motoreinheit 6 befestigt ist, in Fig. 4 noch innerhalb des Puffers 4 befindet, bleibt der Schalter 2; 8 noch in einer Stellung, in der die Kontakte 1; 22 geöffnet sind und der Stromkreislauf des Motors 20 unterbrochen ist.

In Fig. 4 ist die Motoreinheit 6 aufgrund des Freiwerdens eines Drehflügels 10 (Fig. 1) eines Drehflügelmelders innerhalb eines Silos soweit entgegen dem Uhrzeigersinn um die Hochachse 5 verschwenkt, dass der Schaltgeber 3 zu beiden Nasen 11; 21 beabstandet ist.

Der Schaltgeber 3 hat sich in Fig. 4 bereits mit Verschwenken der Motorachse um die Hochachse 5 von der Nase 11 der Halteeinheit 3 abgelöst. Aufgrund des Puffers 4 zwischen den Nasen 11; 21 des Halteteils 13 befindet sich das Halteteil 13 mit seiner Rundung 23 noch in Berührung mit dem Kontakt 1 des Schalters 2; 8.

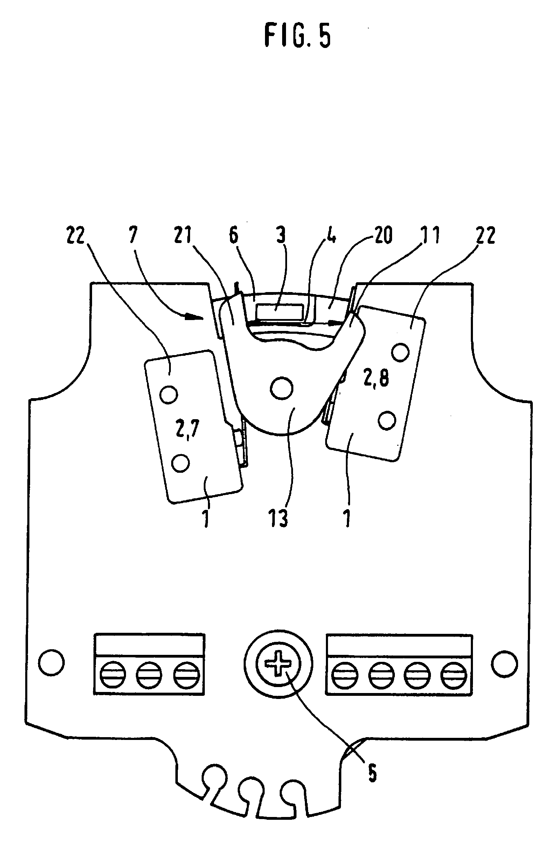

Fig. 5 zeigt eine Darstellung, in der der Drehflügel des Drehflügelmelders weiter unbeeinflusst vom Schüttgut innerhalb des Silos bleibt, so dass sich der Schaltgeber 3 innerhalb des Puffers 4 weiter in Richtung auf den Schalter 2; 7 hin bewegen kann. Fig. 5 zeigt folglich im Wesentlichen die Situation nach Fig. 3 mit dem Unterschied, dass der Schaltgeber 3 sich innerhalb des Puffers 4 zwischen den Nasen 11; 21 weiter an die Nase 21 im Bereich der Ausgangsstellung 7 angenähert hat.

Der Schaltgeber 3 befindet sich nach wie vor im Puffer 4 zwischen den Nasen 11 und 21. In Fig. 5 hat der Schaltgeber 3 die Nase 11 des Halteteils 13 jedoch noch nicht erreicht, so dass das Halteteil 13 mit seinen Einrichtungen 14 noch in der Schwenkposition bleibt, in der die Kontakte 1; 22 des Schalters 2; 8 geöffnet bleiben. Da der Schaltgeber das in Draufsicht linke Ende des Puffers 4, nämlich die Nase 21 des Halteteils 13 noch nicht erreicht, so dass die Rundung 23 des Stützzylinders 19 des Halteteils 13 nach wie vor die Kontakte 1; 22 des Stromkreislaufs in dem Schalter 2; 8 geöffnet hält, ist der Motorlauf des Motors 20 weiter unterbrochen.

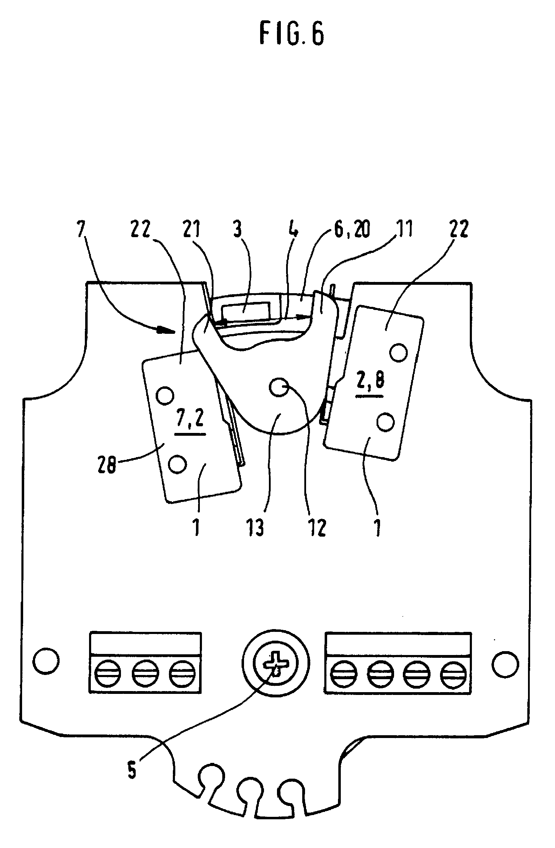

Zu ergänzen ist, dass bei einer kleinen weiteren Auslenkung des Halteteiles 3 in Richtung auf den Schalter 2; 7 hin durch die Schwenkung des Halteteiles 13 der Motorschalter 2; 8 den Motor einschaltet und somit der Motor mit dem Halteteil 3 sofort wieder in Richtung auf den Schalter 2; 8 zuläuft. Dies ist dadurch bedingt, da in der Situation aus Figur 5 der Messflügel noch einen Widerstand von dem Schüttgut erfährt, da der Füllstand im Behälter noch nicht unter das Niveau des Drehflügels gefallen ist (ansonsten würde sofort die Situation aus Figur 6 eintreten.

Wesentlich dabei ist, dass der Motorstart und das Zulaufen auf den Schalter 2; 8 erfolgt, bevor die Situation von Figur 6 erreicht wird, da bei der Situation in Figur 6 bereits der Signalschalter 2; 7 dem Kunden die Meldung "Behälter leer" ausgibt und dies nur bei einem wirklich leeren Behälter der Fall sein darf.

Fig. 6 zeigt eine Situation, in der der Schaltgeber 3 aufgrund der freien Beweglichkeit des Drehflügels innerhalb des Silos aufgrund der Federkraft 9 soweit in die Ausgangsstellung 7 verschwenkt ist, dass der Schaltgeber die Rundung 27 des Halteteils 13 mit den Kontakten 1; 22 des Schalters 2; 7 in Berührung bringt. Fig. 6 zeigt also im Wesentlichen die Situation der Fig. 3, mit dem Unterschied, dass sich der Schaltgeber 3 im Puffer 4 zwischen den Nasen 11 und 21 des Halteteils 13 aufgrund der Schwenkbewegung der Motoreinheit 6 um die Hochachse 5 soweit in Richtung der Ausgangsstellung 7 bewegt hat, dass der Schaltgeber 3 die Rundung 27 des Halteteils 13 an die Kontakte 1; 22 des Schalters 2; 7 heran gedrückt hat.

Aufgrund der Schwenkbewegung des Stützzylinders 19 des Halteteils 13 um die Achse 12 in Richtung auf die Ausgangsstellung 7 hin öffnet oder schließt die Rundung 27 des Stützzylinders 19 die Kontakte 1; 22 des Schalters 2; 7.

Gleichfalls ist in Fig. 6 dargestellt, dass der Schaltgeber 3 durch Verschwenkung des Halteteils 13 die Rundung 23 von den Kontakten 1; 22 des Schalters 2; 8 gelöst hat. Hierdurch ist die Verbindung zwischen dem Kontakten 1 und 22 des Schalters 2; 7 wieder geöffnet. Da der Stromkreis im Schalter 2; 8 wieder geschlossen ist, ist der Lauf des Motors 20 wieder in Gang gesetzt. In dieser Situation liegt die Abflachung 26 des Stützzylinders 19 am Kontakt 1 des Schalters 2; 8 an.

Dadurch dass der Stromfluss im Schalter 2; 7 unterbrochen oder aktiviert ist, wird eine Signaleinrichtung, die dem Schalter 2; 7 zugeordnet ist, deaktiviert oder aktiviert. Die Signaleinrichtung signalisiert, dass das Silo entleert ist. Die Signaleinrichtung kann eine akustische oder visuelle Alarmeinrichtung 28 sein.

Fig. 7 zeigt in perspektivischer Darstellung von schräg unten das Halteteil 13 mit seinem Stützzylinder 19 und den Nasen 11; 21. In Fig. 7 ist innerhalb des Halteteils 13 die Achse 12 erkennbar, um die das Halteteil 13 schwenkbar ist.

Die Einrichtungen 14 sind in Fig. 7 als Rundung 23; 27 und als Abflachung 26 dargestellt. Durch Drehung des Halteteils 13 um die Drehachse 12 können die Einrichtungen 14; 23; 27; 26 mit den Kontakten 1; 22 der Schalter 2; 7, 8 in Berührung gebracht werden.

Zwischen den Nasen 11; 21 des Halteteils 13 erstreckt sich der Puffer 4, in dem der Schaltgeber 3 bewegbar ist.

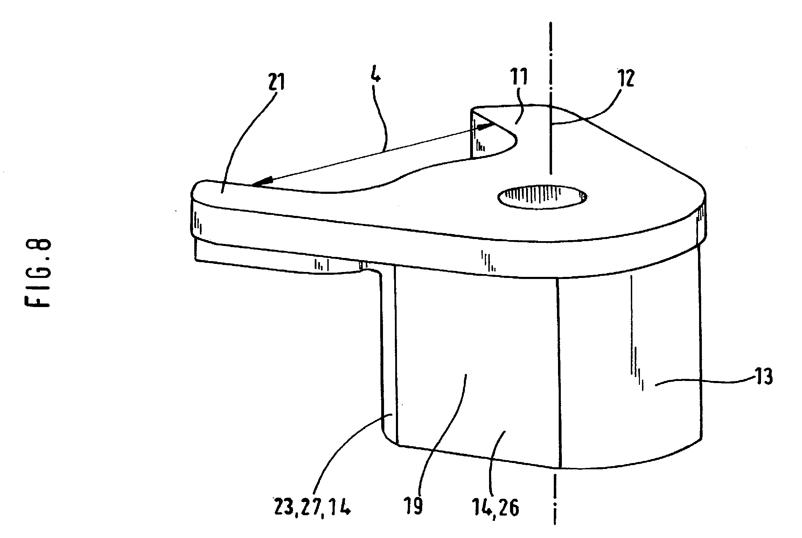

Fig. 8 zeigt das Halteteil 13 entsprechend der Fig. 7 in perspektivischer Darstellung von hinten gesehen. Unterhalb der Nasen 11; 21 erstreckt sich der Stützzylinder 19. Der Stützzylinder 19 weist Einrichtungen 14 auf, die als Rundung 23; 27 und/oder als Abflachung 26 ausgebildet sein können. Das Halteteil 13 ist um die Achse 12 herum verschwenkbar angeordnet, so dass der Puffer 4 zwischen den Nasen 11 und 21 zwischen der Ausgangsstellung 7 und der Schaltstellung 8 hin und her schwenkbar ist.

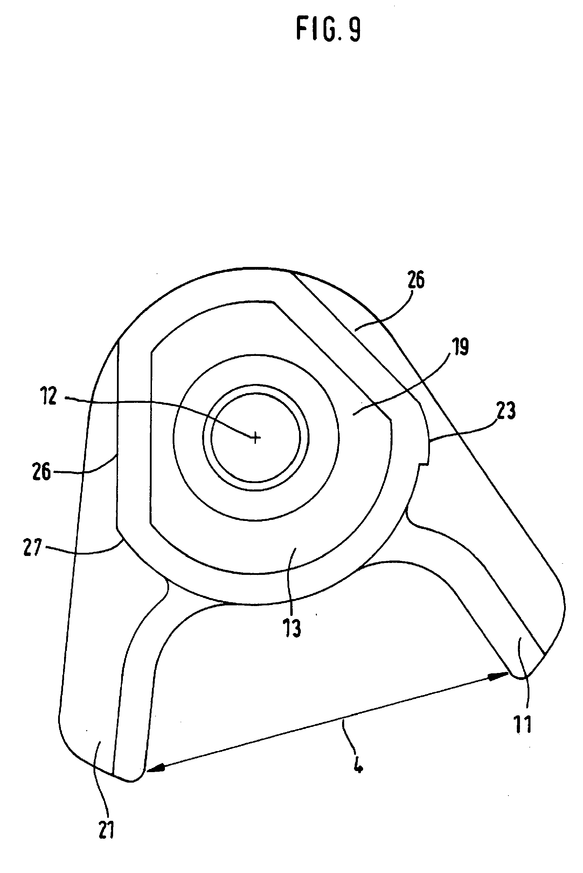

Fig. 9 zeigt das Halteteil 13 in Draufsicht von unten. Elliptisch zum Stützzylinder 19 erstrecken sich die Nasen 11; 21, zwischen denen der Puffer 4 angeordnet ist. Das Halteteil 13 ist mit den Nasen 11; 21 um die Achse 12 schwenkbar. Aus Fig. 9 ist ersichtlich, dass der Stützzylinder Vergrößerungen des Durchmessers in Form der Rundungen 23; 27 sowie Verkleinerungen des Durchmessers in Form der Abflachungen 26 aufweist.

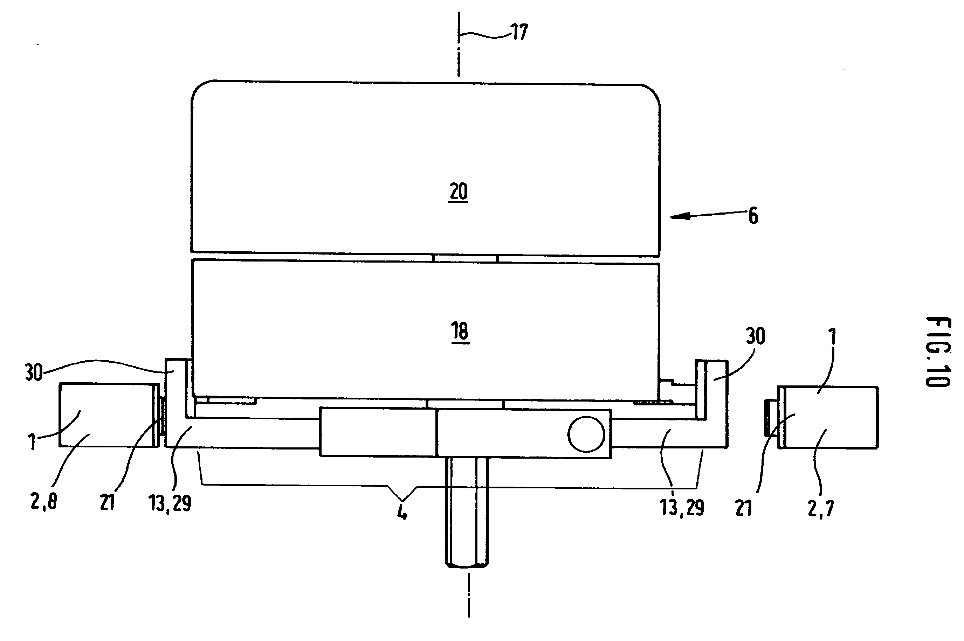

Fig. 10 zeigt eine andere Ausgestaltung der Erfindung mit einer Motoreinheit 6, die einen Motor 20 sowie ein Getriebe 18 umfasst. Die Motoreinheit 6 ist um eine Drehachse 17 innerhalb eines Puffers 4 verschwenkbar. Der Puffer 4 umfasst in Fig. 10 ein Halteteil 13, das eine Grundplatte 29 sowie einander gegenüberliegende Seitenwände 30 aufweist. In der Fig. 10 ist die Motoreinheit innerhalb des Puffers 4 an die Seitenwand 30 des Halteteils 13 verschoben. Zur Aktivierung des Schalters 2; 8 schiebt die Motoreinheit 6 das Halteteil 13 über die Seitenwand 30 an den Kontakt 1 des Schalters 2; 8. Auf der gegenüberliegenden Seite des Schalters 2; 8 ist der Schalter 2; 7 von der Seitenwand 30 des Halteteils 13 beabstandet. Die Kontakte 21 des Schalters 2; 7 sind deshalb geöffnet, wodurch der Stromkreis des Schalters 2; 7 unterbrochen ist.

Das Halteteil 13 ist durch die Schwenkbewegung der Motoreinheit 6 linear zwischen den Schaltern 2; 7 und 2; 8 verschiebbar.

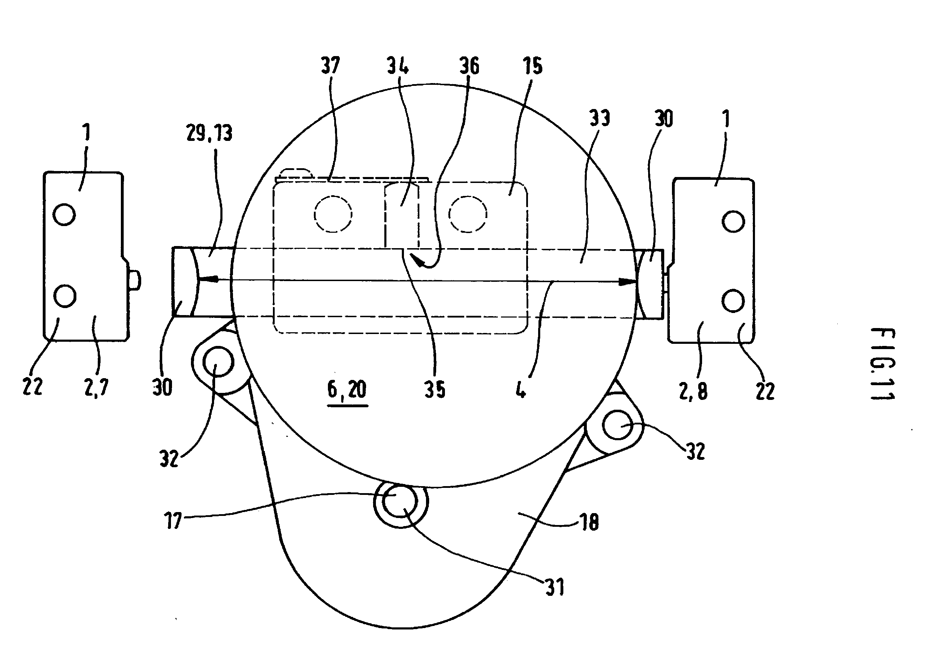

Fig. 11 zeigt die Ausführungsform entsprechend der Fig. 10 von unten. Die Motoreinheit 6 umfasst den Motor 20 und das Getriebe 18. Im Grenzbereich zwischen dem Getriebe 18 und dem Motor 20 ist die Antriebswelle 31 gezeigt. Die Drehachse 17 der Motoreinheit 6 verläuft entlang der Längsachse der Antriebswelle 31. Die Motoreinheit ist im und entgegen dem Uhrzeigersinn um die Drehachse 17 verschwenkbar. Der Schwenkweg der Motoreinheit 6 verläuft innerhalb des Puffers 4, der sich zwischen den Seitenwänden 30 des Halteteils 13 erstreckt. Zur Betätigung der Schalter 2; 7 bzw. 2; 8 verschiebt die Motoreinheit 6 durch ihre Schwenkbewegung das Halteteil 13 mit der Grundplatte 29 und den Seitenwänden 30 linear zwischen den Schaltern 2; 7 und 2; 8. Der Schalter 2; 7 kann ein Signalschalter sein, während der Schalter 2; 8 den Motorlauf unterbricht oder startet. Im Übergangsbereich zwischen dem Motor 20 und dem Getriebe 18 sind seitlich an der Motoreinheit 6 Dome 32 dargestellt, die eine Trägerplatte 33, auf der die Motoreinheit 6 mit ihrem Getriebe 18 aufliegt mit dem einer nicht gezeigten Leiterplatte verbindet.

Auf der vom Getriebe 18 abgewandten Seite ist in Fig. 11 auf der Oberseite der Motoreinheit 6 ein Trageblock 15 dargestellt. Der Trageblock 15 umfasst einen Fixierstift 34, der seitlich am Trageblock 15 verschiebbar gelagert ist und mit seiner Spitze 35 in eine Nut 36 der Trägerplatte 33 des Halteteils 13 eingreift. Der Fixierstift ist rechtwinklig zur Trägerplatte 33 des Halteteils 13 an der Seite des Tragblocks verschiebbar. An der Stirnseite des Trageblocks 15 ist eine Fixierfeder 37 angeschraubt, die mit ihrem freien Ende den Fixierstift 34 entlang dem Trageblock 15 mit der Spitze 35 in der Trägerplatte 33 der Grundplatte 29 des Halteteils 13 verankert.

Wenn die Motoreinheit 6 das Halteteil 13 linear zwischen den Schaltern 2; 7 und 2; 8 gegenüber dem Fixierstift 34 verschiebt, wird der Fixierstift 34 mit seiner Spitze 35 gegen die Kraft der Fixierfeder 37 aus der Nut 36 herausgedrückt.

Der Fixierstift 34 fixiert das Halteteil 13 in der Stellung, in der das Halteteil 13 mit seiner Seitenwand 30 die Kontakte 1; 22 des Schalters 2; 8 öffnet und dadurch den Stromkreis im Schalter 2; 8 öffnet. Wird die Motoreinheit innerhalb des Puffers 4 wieder in Richtung des Schalters 2; 7 verschwenkt und nimmt dabei das Halteteil 13 mit, so wird die Spitze 35 des Fixierstifts 34 entgegen der Kraft der Fixierfeder 37 aus der Nut 36 in der Trägerplatte 33 des Halteteils 13 herausgedrückt. Innerhalb der Schalter 2; 7 und 2; 8 ist das Halteteil 13 mit der Trägerplatte 33 wieder frei verschiebbar.

### Bezugsziffern

- 1: Kontakt
- 2: Schalter
- 3: Schaltgeber
- 4: Puffer
- 5: Hochachse
- 6: Motoreinheit
- 7: Ausgangsstellung
- 8: Schaltstellung
- 9: Feder
- 10: Drehflügel
- 11: Nase (rechts)
- 12: Achse
- 13: Halteteil
- 14: Einrichtung
- 15: Trageblock
- 16: Gehäuse
- 17: Drehachse (Motoreinheit)
- 18: Getriebe
- 19: Stützzylinder
- 20: Motor
- 21: Nase (links)
- 22: Kontakt
- 23: Rundung
- 24: Schalthebel (Ausgangsstellung)
- 25: Schalthebel (Schaltstellung)
- 26: Abflachung
- 27: Rundung (links)
- 28: Alarmeinrichtung
- 29: Grundplatte
- 30: Seitenwand
- 31: Antriebswelle
- 32: Dom
- 33: Trägerplatte
- 34: Fixierstift
- 35: Spitze
- 36: Nut
- 37: Fixierfeder

## Patentansprüche

1. Schalter für einen Drehflügelmelder zur Veränderung des Schaltzustands wenigstens eines auf einen elektrischen Stromkreis wirkenden Kontakts (1; 22) mit einem den Schalter (2) betätigenden Schaltgeber (3), **dadurch gekennzeichnet, dass** dem Schaltgeber (3) ein die Betätigung des Schalters (2) zeitlich verzögernder Puffer (4) vorgeschaltet ist.

2. Schalter nach Anspruch 1, **dadurch gekennzeichnet, dass** der Schaltgeber (3) mit einer um eine Hochachse (5) verschwenkbaren Motoreinheit (6) zwischen einer Ausgangsstellung (7) und einer Schaltstellung (8) verschwenkbar ist.

3. Schalter nach Anspruch 2, **dadurch gekennzeichnet, dass** die Motoreinheit (6) in oder entgegen dem Uhrzeigersinn verschwenkbar ist.

4. Schalter nach Anspruch 2, **dadurch gekennzeichnet, dass** die Motoreinheit (6) über eine Feder (9) mit einem Gehäuse verbunden ist.

5. Schalter nach Anspruch 2, **dadurch gekennzeichnet, dass** die Motoreinheit (6) einen Drehflügel (10) antreibt.

6. Schalter nach Anspruch 1, **dadurch gekennzeichnet, dass** eine Änderung des Schaltzustands des Kontakts (1; 22) den Motorlauf unterbricht oder wieder startet.

7. Schalter nach Anspruch 1, **dadurch gekennzeichnet, dass** der Puffer (4) eine Kulisse oder eine Nut oder ein Schlitz ist, in der der Schaltgeber (3) zwangsgeführt ist.

8. Schalter nach Anspruch 1, **dadurch gekennzeichnet, dass** sich der Puffer (4) zwischen Nasen (11; 21) eines um eine Achse (12) schwenkbaren Halteteils (13) erstreckt.

9. Schalter nach Anspruch 1, **dadurch gekennzeichnet, dass** das Halteteil (13) Einrichtungen (14) zur Änderung des Schaltzustands des Kontakts (1) aufweist.

10. Schalter nach Anspruch 1, **dadurch gekennzeichnet, dass** der Puffer (4) wenigstens einen betätigbaren Auslöser aufweist.

11. Schalter nach Anspruch 1, **dadurch gekennzeichnet, dass** der Schaltgeber (3) eine Schaltfahne ist.
